# EUROPÄISCHE PATENTSCHRIFT

(11) **EP 3 738 789 B1**
(45) Veröffentlichungstag und Bekanntmachung des Hinweises auf die Patenterteilung: **09.03.2022**
(21) Anmeldenummer: 20166186.5
(22) Anmeldetag: 27.03.2020
(51) Int. Cl.: B60C 9/00, B60C 9/18, D02G 3/48, B60C 9/22, B60C 9/04, B60C 9/20

(54) **FESTIGKEITSTRÄGERLAGE FÜR EINEN FAHRZEUGLUFTREIFEN**
REINFORCEMENT FOR A PNEUMATIC VEHICLE TYRE
NAPPE DE RENFORCEMENT POUR UN PNEU DE VÉHICULE

(30) Priorität: 15.05.2019 DE 102019207014
(43) Veröffentlichungstag der Anmeldung: 18.11.2020
(73) Patentinhaber: Continental Reifen Deutschland GmbH, 30165 Hannover (DE)
(72) Erfinder: Reese, Wolfgang, 30419 Hannover (DE)
(74) Vertreter: Continental Corporation

(56) Entgegenhaltungen:
- EP-A1- 3 093 379
- EP-A1- 3 147 138
- EP-A1- 3 254 871
- EP-A1- 3 269 561
- WO-A1-99/25571
- CA-A1- 2 001 475
- DE-A1-102017 201 631
- Diolen: "Yarn Types and Properties", , 31. März 2017 (2017-03-31), XP055712990, Gefunden im Internet: URL:http://www.php-fibers.com/fileadmin/We bsite_Inhalt/Dokumente/PHP_Property_Book_- _Edition_2017.pdf [gefunden am 2020-07-08]

## Beschreibung

Die Erfindung betrifft eine Festigkeitsträgerlage eines Fahrzeugluftreifens, insbesondere Festigkeitsträgerlage einer Gürtelbandage, wobei die Festigkeitsträgerlage einen Festigkeitsträger mit zumindest einem Polyamidgarn aus miteinander verdrehten

Filamenten aus Polyamid aufweist. Weiter betrifft die Erfindung einen Fahrzeugluftreifen aufweisend eine solche Festigkeitsträgerlage.

Ein "Garn" ist im Rahmen der vorliegenden Erfindung in Anlehnung an die DIN 60900 ein linienförmiges Gebilde, das aus mehreren einzelnen Filamenten, d.h. Endlosfasern, besteht. Die Filamente des Garns sind miteinander verdreht. Im Rahmen der vorliegenden

Erfindung stellen "Korde" linienförmige Gebilde dar, die aus zwei oder mehr miteinander endverdrehten Garnen bestehen.

Die "Feinheit" eines Garns oder eines Kords ist ein Maß für dessen Gewicht pro Länge.

Ein Fahrzeugluftreifen radialer Bauart weist im Allgemeinen eine luftundurchlässige Innenschicht, eine Festigkeitsträger enthaltende Radialkarkasse, die vom Zenitbereich des Reifens über die Seitenwände bis in den Wulstbereich reicht und dort meist durch Umschlingen zugfester Wulstkerne verankert ist, einen radial außen befindlichen profilierten Laufstreifen und einen zwischen dem Laufstreifen und der Karkasse angeordneten Gürtel auf, welcher radial außen mit einer Gürtelbandage ganz oder teilweise abgedeckt ist. Die Gürtelbandage kann ein- oder mehrlagig ausgebildet sein und deckt üblicherweise zumindest die Gürtelkanten ab. Die Gürtelbandage enthält üblicherweise parallel und im Wesentlichen in Umfangsrichtung verlaufende Festigkeitsträger, die in

Gummi eingebettet sind. Auf einer vom Wulstkern abgewandten Seite der Karkasse kann im Wulstbereich eine zumindest eine Festigkeitsträgerlage aufweisende Wulstverstärkung angebracht sein.

Solche Festigkeitsträgerlagen für Fahrzeugluftreifen, sind dem Fachmann in Aufbau und Werkstoff in verschiedensten Ausführungen bekannt. Die Festigkeitsträger werden, beispielsweise durch Kalandrieren, in eine Kautschukmischung eingebettet, um als gummierte Festigkeitsträgerlage im Fahrzeugluftreifen eingesetzt werden zu können.

Es kann sich dabei um eine Festigkeitsträgerlage eines Fahrzeugluftreifens, insbesondere für die Karkasse und/oder die Gürtelbandage und/oder den Wulstbereich, handeln.

Die Gürtelbandage verhindert eine Erhebung des Reifens durch die im Fahrbetrieb, insbesondere im Hochgeschwindigkeitseinsatz, auftretenden Fliehkräfte. Die Gürtelbandage wird bei der Reifenherstellung in Form von Lagen, Streifen oder Einzel-Festigkeitsträgern mit in eine unvulkanisierte Kautschukmischung eingebetteten Festigkeitsträgern aufgebracht, die auf den Gürtel gewickelt oder gespult werden. Die Festigkeitsträger werden in Kautschuk eingebettet, indem eine Schar von im Wesentlichen parallel liegenden fadenförmigen Festigkeitsträgern, die in der Regel zur besseren Haftung am einbettenden Gummi mit einer Haftimprägnierung versehen sind, in Längsrichtung einen Kalander oder einen Extruder zur Ummantelung mit der Kautschukmischung durchlaufen. Bei der Bombage und Vulkanisation des Reifens erhebt/dehnt sich der Reifen in der Regel im Schulterbereich bis 2 % und im Mittenbereich bis 4 % im Vergleich zum unvulkanisierten Rohling, wenn der Rohling auf einer flachen Trommel gewickelt wird.

Als Material für die Festigkeitsträger insbesondere der Gürtelbandage, ist es bekannt, Festigkeitsträger aufweisend zumindest ein Garn aus Filamenten aus Polyamid 6.6 (PA 6.6) zu verwenden. PA 6.6 weist einen insbesondere für die Verwendung in der Gürtelbandage vorteilhaften Heißschrumpf auf. Festigkeitsträger aufweisend Garne aus Polyamid können auch für andere Festigkeitsträgerlagen vorteilhaft sein, insbesondere für eine Karkasslage und/oder eine Wulstverstärkung. Dokument EP3147138 offenbart eine

Festigkeitsträgerlage für einen Fahrzeugluftreifen, bei dem ein Polyamid-Multifilamentgarn aus miteinander verdrehten Filamenten aus Polyamid 6.6 eingesetzt wird. Das Dokument EP3147138 macht keine Angaben über die Anzahl der für dieses Polyamid-Multifilamentgarn einzusetzenden Filamente pro tex.

Aus Dokument EP3269561 ist eine Festigkeitsträgerlage für Fahrzeugluftreifen bekannt, bei dem ein Polyamid-Multifilamentgarn aus miteinander verdrehten Filamenten aus Polyamid PA 4.6 eingesetzt wird. In EP3269561 werden 1,0 bis 2,0 Filamente pro tex als vorteilhaft für ein derartiges Polyamid-Multifilamentgarn angesehen. In der Regel sind Garne mit bestimmten handelsüblichen Filamentdichten allgemein marktverfügbar. Eine handelsübliche Filamentdichte für Garne aus PA 6.6 ist beispielsweise eine Filamentdichte von in etwa 1,5 Filamente/tex, wobei die Filamentdichte die Anzahl an Filamenten pro Feinheit des Garns angibt. An die Festigkeitsträger von Fahrzeugluftreifen werden vielfältige Anforderungen gestellt, die je nach Einsatz der Festigkeitsträger unterschiedlich gestaltet sein können. Das Bestreben geht dahin, die Festigkeitsträger bezüglich unterschiedlicher Anforderungen zu verbessern.

Eine dieser Anforderungen ist eine vorteilhafte Hystereseeigenschaft bei dynamischer Wechselbelastung wie sie beispielsweise bei Festigkeitsträgerlagen von Fahrzeugluftreifen im Betrieb des Fahrzeugluftreifens auftreten.

Aufgabe ist es, eine Festigkeitsträgerlage eines Fahrzeugluftreifens, insbesondere eine Festigkeitsträgerlage der Gürtelbandage, zur Verfügung zu stellen, die verbesserte Hystereseeigenschaften bei dynamischer Wechselbelastung aufweist.

Diese Aufgabe wird durch eine Festigkeitsträgerlage entsprechend Anspruch 1 gelöst.

Ein solcher Festigkeitsträger weist ein Polyamidgarn auf, das eine stark verringerte Filamentdichte hat. Somit ist der Filamentdurchmesser der Filamente aus Polyamid vergrößert und bei gleichbleibender Gesamtfeinheit des Garns weist dieses eine stark verringerte Zahl an Filamenten aus Polyamid auf. Hierdurch weist das Polyamidgarn eine stark verringerte Anzahl an Linearkontakten zwischen den einzelnen Filamenten des Polyamidgarns auf, wodurch sich bei dynamischer Wechselbelastung ein verringerter Hystereseverlust ergibt.

Beispielsweise führt einer Reduktion der Filamentdichte von 1,5 Filamente/tex auf 1,0 Filamente/tex bei einer angenommenen Gesamtfeinheit des Polyamidgarns von 470 dtex zu einer Reduktion der Anzahl der Filamente von ca. 71 Filamenten auf ca. 47 Filamenten, was einer Reduktion um ca. 34% entspricht. Die Anzahl an Linearkontakten ist hierdurch signifikant verringert.

Somit ist eine Festigkeitsträgerlage zur Verfügung gestellt, die bei gleichbleibenden Materialeigenschaften zusätzlich verbesserte Hystereseeigenschaften bei dynamischer Wechselbelastung, wie sie bei Festigkeitsträgerlagen von Fahrzeugluftreifen, insbesondere der Gürtelbandage, auftritt, aufweist.

Eine vorteilhafte Ausführungsform ist dadurch gegeben, dass das Polyamidgarn eine Filamentdichte von 0,5 Filamente/tex bis 1,0 Filamente/tex aufweist.

Bei einer Filamentdichte von unter 0,5 Filamente/tex kann durch den stark vergrößerten Filamentdurchmesser ein negativer Effekt in der Ermüdungsbeständigkeit entstehen.

In der erfindungsgemäßen Festigkeitsträgerlage wird PA 6.6 für die Filamente des Polyamidgarns eingesetzt.

PA 6.6 weist eine gute Marktverfügbarkeit auf und ist kostengünstig in seiner Anschaffung. PA 6.6 ist ein für Festigkeitsträger eines Fahrzeugluftreifens übliches Material. Festigkeitsträger aufweisend ein Polyamidgarn mit Filamenten aus PA 6.6 eignen sich bevorzugt für den Einsatz als Festigkeitsträger der Gürtelbandage, da derartige Festigkeitsträger einen vorteilhaften Heißschrumpf und Schrumpfkraft aufweisen und zusätzlich robust bzgl. Ermüdungsbeständigkeit sind.

Eine vorteilhafte Ausführungsform ist dadurch gegeben, dass das Polyamidgarn eine Feinheit von 200 dtex bis 2800 dtex, bevorzugt von 200 dtex bis 1400 dtex, aufweist. Garne einer solchen Feinheit eignen sich hervorragend für Festigkeitsträger von Festigkeitsträgerlagen für Fahrzeugluftreifen. Eine vorteilhafte hohe Marktverfügbarkeit weisen z.B. Polyamidgarne der Feinheit 350 dtex, 470 dtex, 700 dtex, 940 dtex und 1400 und 1880 dtex auf.

Eine vorteilhafte Ausführungsform ist dadurch gegeben, dass der Festigkeitsträger genau ein Garn aufweist, wobei das genau eine Garn das Polyamidgarn ist.

Ein solcher Festigkeitsträger weist eine besonders einfache Konstruktion auf und ist kostengünstig in seiner Herstellung.

Dabei ist es vorteilhaft, wenn das Polyamidgarn einen Twist-Faktor α von 35 bis 45 aufweist.

Der Twist-Faktor α ist dabei definiert als α = Verdrehungszahl [T/m] · (Feinheit [tex]/ 1000)^{1/2}. Die Verdrehungszahl ist in Umdrehungen pro Meter (Turns per meter) angegeben. Das Polyamidgarn aufweisend einen solchen Twist-Faktor zeichnet sich durch eine vorteilhafte Ermüdungsbeständigkeit aus.

Eine andere vorteilhafte Ausführungsform ist dadurch gegeben, dass der Festigkeitsträger ein Kord aus zumindest zwei miteinander endverdrehten Garnen ist, wobei zumindest eines, bevorzugt alle, der Garne ein Polyamidgarn ist.

Korde aus zumindest zwei miteinander endverdrehten Garnen sind übliche Festigkeitsträger von Fahrzeugluftreifen. Eine besonders einfache Konstruktion ergibt sich, wenn alle Garne des Kordes Polyamidgarne sind.

Zweckmäßig ist es, wenn der Kord genau zwei Garne aufweist. Besonders zweckmäßig ist es, wenn beide Garne Polyamidgarne sind. Vorteilhaft sind dabei Korde der Konstruktion 235×2, 350×2, 470 dtex x 2, 700×2, 940 dtex x 2 und 1400 dtex x 2.

Vorteilhaft ist es dabei, wenn der Kord genau zwei Garne und einen Twist-Faktor α von 100 bis 250 aufweist.

Der Twist-Faktor α ist dabei definiert als α = Verdrehungszahl [T/m] · (Feinheit [tex]/ 1000)^{1/2}, wobei die Feinheit die Gesamtfeinheit des Kordes, d.h. die kumulierte Feinheit der beiden Garne, ist. Die Verdrehungszahl ist in Umdrehungen pro Meter (Turns per meter) angegeben. Der Kord aufweisend einen solchen Twist-Faktor zeichnet sich durch eine vorteilhafte Ermüdungsbeständigkeit aus.

Um eine zuverlässige Haftung von textilen Festigkeitsträgern zum Gummi zu gewährleisten, ist es zweckmäßig, die Festigkeitsträger mit einer Haftimprägnierung, z.B. mit einem RFL-Dip im 1- oder 2-Bad-Verfahren, zu versehen. Es sind aber auch alle weiteren dem Fachmann bekannten Verfahren und Haftmittel zur Imprägnierung denkbar. Die Erfindung betrifft insbesondere eine Festigkeitsträgerlage der Gürtelbandage und/oder der Karkasse und/oder der Wulstverstärkung. Eine solche Festigkeitsträgerlage weist verbesserte Hystereseeigenschaften bei dynamischer Wechselbelastung, wie sie im Betrieb des Reifens auftreten, auf.

Besonders vorteilhaft ist eine solche Festigkeitsträgerlage als Lage der Gürtelbandage, da hierbei die Materialeigenschaften der Fasern aus Polyamid PA 6.6, wie ein vorteilhafter Heißschrumpf, besonders vorteilhaft sind.

Für den Einsatz als Festigkeitsträger der Karkasslage ist auch die hohe Ermüdungsbeständigkeit von PA 6.6 vorteilhaft.

Die Erfindung umfasst auch einen Fahrzeugluftreifen aufweisend zumindest eine erfindungsgemäße Festigkeitsträgerlage.

Weitere Merkmale, Vorteile und Einzelheiten der Erfindung werden nun anhand der schematischen Zeichnungen, die Ausführungsbeispiele darstellen, näher erläutert. Dabei zeigt die
Fig. 1 einen radialen Querschnitt durch einen Fahrzeugluftreifen;
Fig. 2 ein Polyamidgarn;
Fig. 3 einen Festigkeitsträger;
Fig. 4 eine Festigkeitsträgerlage.

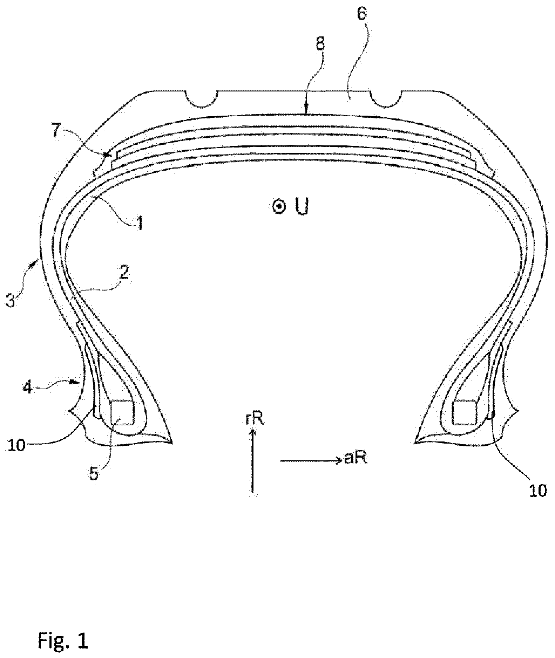

Die Figur 1 zeigt einen Fahrzeugluftreifen für einen Personenkraftwagen. Die wesentlichen Bauteile, aus welchen sich der dargestellte Fahrzeugluftreifen zusammensetzt, sind eine weitgehend luftundurchlässige Innenschicht 1, eine hier eine Festigkeitsträgerlage 9 umfassende Karkasse 2, die in herkömmlicher Weise vom Zenitbereich des Fahrzeugluftreifens über die Seitenwände 3 bis in die Wulstbereiche 4 reicht und dort durch Umschlingen zugfester Wulstkerne 5 verankert ist, einen radial außerhalb der Karkasse befindlichen profilierten Laufstreifen 6 und einen zwischen dem Laufstreifen 6 und der Karkasse 2 angeordneten beinhaltenden Gürtel 7, welcher radial außen mit der hier eine Festigkeitsträgerlage 9 umfassenden Gürtelbandage 8 abgedeckt ist. Der Fahrzeugluftreifen kann einen Wulstverstärker 10 aufweisen. Der Wulstverstärker 10 ist ganz oder teilweise im Wulstbereich 4 angeordnet. Der Wulstverstärker 10 ist axial außerhalb und anschließend an die Karkasse 2 positioniert. Der Wulstverstärker 10 beinhaltet zumindest eine Festigkeitsträgerlage, welche ringkreisförmig im Bereich des Wulstes um den Reifen umläuft.

Bei Fahrzeugluftreifen in wie in Fig. 1 gezeigter radialer Bauart sind die Festigkeitsträger einer Festigkeitsträgerlage 9 der Karkasse 2 in etwa parallel zueinander in etwa in radialer Richtung angeordnet. Die Festigkeitsträgerlage 9 der Gürtelbandage 8 beinhaltet einen oder mehrere Festigkeitsträger, der oder die kontinuierlich entlang der axialen Breite gewickelt ist oder sind.

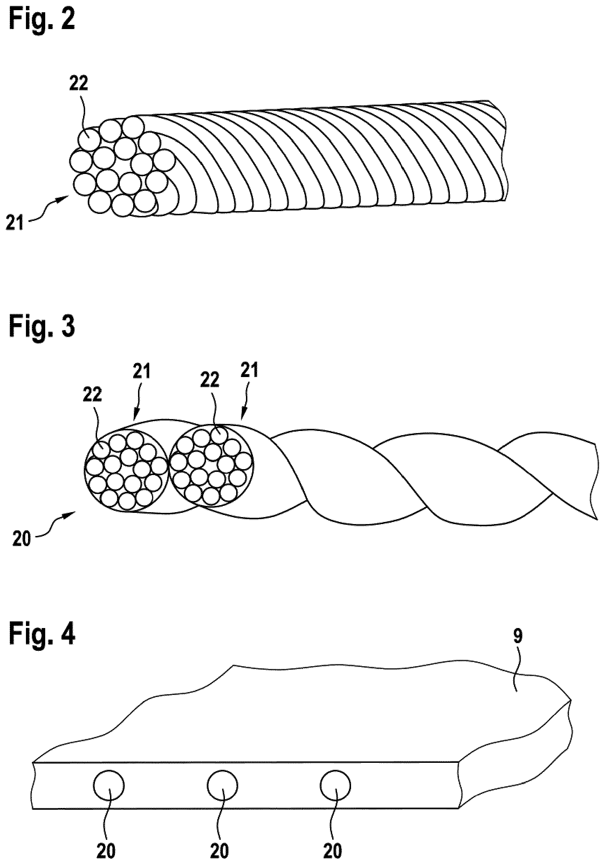

Eine oder mehrere Festigkeitsträgerlagen der Gürtelbandage 8 und/oder der Karkasse 2 und/oder der Wulstverstärkung 10, bevorzugt der Gürtelbandage 8, kann/können eine erfindungsgemäße Festigkeitsträgerlage 10 aufweisen. Eine derartige Festigkeitsträgerlage 9 ist in der Figur 4 dargestellt.

Die erfindungsgemäße Festigkeitsträgerlage 9 weist einen Festigkeitsträger 20 auf, welcher ein Polyamidgarn 21 aus miteinander verdrehten Filamenten 22 aus Polyamid mit einer Filamentdichte von maximal 1 Filamente/tex aufweist, wobei die Filamentdichte die Anzahl an Filamenten 22 bezogen auf die Feinheit des Polyamidgarns angibt. Bevorzugt weist das Polyamidgarn eine Filamentdichte von 0,5 Filamente/tex bis 1,0 Filamente/tex auf.

Die Figur 2 zeigt ein derartiges Polyamidgarn 22, wobei die gezeichnete Anzahl der Filamente 21 der Veranschaulichung dient.

Das Polyamid der Fasern 22 des Polyamidgarns 21 2. besteht PA 6.6.

Die Feinheit des Polyamidgarns 21 beträgt 200 dtex bis 2800 dtex, bevorzugt 200 dtex bis 1400 dtex. Sie kann insbesondere 235 dtex, 350 dtex, 470 dtex, 700 dtex, dtex, 940 dtex oder 1400 dtex oder 1880 dtex betragen.

Der Festigkeitsträger 20 für eine Festigkeitsträgerlage 9 des Fahrzeugluftreifens kann genau ein Garn aufweisen, wobei das genau eine Garn ein solches Polyamidgarn 21 ist. Das Polyamidgarn kann dabei einen Twist-Faktor α von 35 bis 45 aufweisen.

Der Festigkeitsträger 20 für eine Festigkeitsträgerlage 9 des Fahrzeugluftreifens kann aber auch ein Kord aus zumindest zwei miteinander endverdrehten Garnen sein, wobei zumindest eines, bevorzugt alle, der Garne das Polyamidgarn 21 ist.

Die Figur 3 zeigt eine Ausführungsform eines derartigen Festigkeitsträgers 20. Der Festigkeitsträger 20 ist dabei ein Kord aus zwei miteinander endverdrehten Polyamidgarnen 21. Bei den Polyamidgarnen 21 kann es sich jeweils um einen in der Figur 2 gezeigtes Polyamidgarn 21 handeln. Der Kord kann dabei die Konstruktion 235 dtex x 2, 350 dtex x 2, 470 dtex x 2, 700 dtex x 2, 940 dtex x 2 oder 1400 dtex x 2 oder 1880 dtex x 2 aufweisen. Der Kord kann dabei einen Twist-Faktor α von 100 bis 250 aufweisen.

Die Figur 4 zeigt eine erfindungsgemäße Festigkeitsträgerlage 9 aufweisend zumindest einen Festigkeitsträger 20 eines Fahrzeugluftreifens. Es kann sich um eine Festigkeitsträgerlage 9 der in der Figur 1 gezeigten Gürtelbandage 8 und/oder Karkasse 2 und/oder Wulstverstärkung 10 handeln. Der Festigkeitsträger 20 kann der in der Figur 2 oder 3 gezeigte Festigkeitsträger 20 sein. Eine solche Festigkeitsträgerlage 9 eignet sich hervorragend für eine Gürtelbandage 8.
- 1: Innenschicht
- 2: Karkasse
- 3: Seitenwand
- 4: Wulstbereich
- 5: Wulstkern
- 6: Laufstreifen
- 7: Gürtel
- 8: Gürtelbandage
- 9: Festigkeitsträgerlage
- 10: Wulstverstärker
- 20: Festigkeitsträger
- 21: Polyamidgarn
- 22: Filament

## Patentansprüche

1. Festigkeitsträgerlage (9) eines Fahrzeugluftreifens, insbesondere Festigkeitsträgerlage (9) einer Gürtelbandage (8), wobei die Festigkeitsträgerlage (9) einen Festigkeitsträger (20) mit zumindest einem Polyamidgarn (21) aus miteinander verdrehten Filamenten (22) aus Polyamid PA 6.6 aufweist, **dadurch gekennzeichnet, dass** das Polyamidgarn (21) eine Filamentdichte von maximal 1 Filamente/tex aufweist, wobei die Filamentdichte die Anzahl an Filamenten (22) bezogen auf die Feinheit des Polyamidgarns (21) angibt.

2. Festigkeitsträgerlage (9) nach Anspruch 1, **dadurch gekennzeichnet, dass** das Polyamidgarn (21) eine Filamentdichte von 0,5 Filamente/tex bis 1,0 Filamente/tex aufweist.

3. Festigkeitsträgerlage (9) nach einem oder mehreren der vorhergehenden Ansprüche, **dadurch gekennzeichnet, dass** das Polyamidgarn (21) eine Feinheit von 200 dtex bis 2800 dtex, bevorzugt von 200 dtex bis 1400 dtex, aufweist.

4. Festigkeitsträgerlage (9) nach einem oder mehreren der vorhergehenden Ansprüche, **dadurch gekennzeichnet, dass** der Festigkeitsträger (20) genau ein Garn aufweist, wobei das genau eine Garn das Polyamidgarn (21) ist.

5. Festigkeitsträgerlage (9) nach Anspruch 5, **dadurch gekennzeichnet, dass** das Polyamidgarn (21) einen Twist-Faktor α von 35 bis 45 aufweist.

6. Festigkeitsträgerlage (9) nach einem oder mehreren der Ansprüche 1 bis 4, **dadurch gekennzeichnet, dass** der Festigkeitsträger (20) ein Kord aus zumindest zwei miteinander endverdrehten Garnen ist, wobei zumindest eines, bevorzugt alle, der Garne ein Polyamidgarn (21) ist.

7. Festigkeitsträgerlage (9) nach dem vorhergehenden Anspruch, **dadurch gekennzeichnet, dass** der Kord genau zwei Garne und einen Twist-Faktor α von 100 bis 250 aufweist.

8. Fahrzeugluftreifen aufweisend eine Festigkeitsträgerlage (9) gemäß einem oder mehreren der Ansprüche 1 bis 7, wobei die Festigkeitsträgerlage eine Festigkeitsträgerlage (9) einer Gürtelbandage (8) ist.

9. Fahrzeugluftreifen aufweisend eine Festigkeitsträgerlage (9) gemäß einem oder mehreren der Ansprüche 1 bis 7, wobei die Festigkeitsträgerlage eine Festigkeitsträgerlage (9) einer Karkasse (2) ist.

10. Fahrzeugluftreifen aufweisend eine Festigkeitsträgerlage (9) gemäß einem oder mehreren der Ansprüche 1 bis 7, wobei die Festigkeitsträgerlage eine Festigkeitsträgerlage (9) einer Wulstverstärkung (10) ist.

## Claims

1. Reinforcing layer (9) of a pneumatic vehicle tyre, in particular a reinforcing layer (9) of a belt bandage (8), the reinforcing layer (9) comprising a reinforcement (20) with at least one polyamide yarn (21) made up of twisted-together filaments (22) of polyamide PA 6.6,
**characterized in that**
the polyamide yarn (21) has a filament density of a maximum of 1 filament/tex, the filament density indicating the number of filaments (22) with respect to the fineness of the polyamide yarn (21).

2. Reinforcing layer (9) according to Claim 1, **characterized in that** the polyamide yarn (21) has a filament density of 0.5 filament/tex to 1.0 filament/tex.

3. Reinforcing layer (9) according to one or more of the preceding claims, **characterized in that** the polyamide yarn (21) has a fineness of 200 dtex to 2800 dtex, preferably of 200 dtex to 1400 dtex.

4. Reinforcing layer (9) according to one or more of the preceding claims, **characterized in that** the reinforcement (20) comprises precisely one yarn, the precisely one yarn being a polyamide yarn (21).

5. Reinforcing layer (9) according to Claim 5, **characterized in that** the polyamide yarn (21) has a twist factor α of 35 to 45.

6. Reinforcing layer (9) according to one or more of Claims 1 to 4, **characterized in that** the reinforcement (20) is a cord made up of at least two yarns twisted together at the ends, at least one, preferably all, of the yarns being a polyamide yarn (21) .

7. Reinforcing layer (9) according to the preceding claim, **characterized in that** the cord comprises precisely two yarns and has a twist factor α of 100 to 250.

8. Pneumatic vehicle tyre having a reinforcing layer (9) according to one or more of Claims 1 to 7, the reinforcing layer being a reinforcing layer (9) of a belt bandage (8).

9. Pneumatic vehicle tyre having a reinforcing layer (9) according to one or more of Claims 1 to 7, the reinforcing layer being a reinforcing layer (9) of a carcass (2).

10. Pneumatic vehicle tyre having a reinforcing layer (9) according to one or more of Claims 1 to 7, the reinforcing layer being a reinforcing layer (9) of a bead reinforcement (10).

## Revendications

1. Couche de renfort (9) d'un pneumatique de véhicule, en particulier couche de renfort (9) d'un bandage de ceinture (8), la couche de renfort (9) comportant un renfort (20) pourvu d'au moins un fil de polyamide (21) formé à partir de filaments torsadés (22) en polyamide PA 6.6,
**caractérisée en ce que**
le fil de polyamide (21) a une densité de filaments d'au maximum 1 filament/tex, la densité de filaments indiquant le nombre de filaments (22) rapporté à la finesse du fil de polyamide (21).

2. Couche de renfort (9) selon la revendication 1, **caractérisée en ce que** le fil de polyamide (21) a une densité de filaments de 0,5 filament/tex à 1,0 filament/tex.

3. Couche de renfort (9) selon une ou plusieurs des revendications précédentes, **caractérisée en ce que** le fil de polyamide (21) a une finesse de 200 dtex à 2800 dtex, de préférence de 200 dtex à 1400 dtex.

4. Couche de renfort (9) selon une ou plusieurs des revendications précédentes, **caractérisée en ce que** le renfort (20) comporte exactement un fil, l'exactement un fil étant le fil de polyamide (21).

5. Couche de renfort (9) selon la revendication 5, **caractérisée en ce que** le fil de polyamide (21) a un facteur de torsion α de 35 à 45.

6. Couche de renfort (9) selon une ou plusieurs des revendications 1 à 4, **caractérisé en ce que** le renfort (20) est une corde formée d'au moins deux fils torsadés l'un avec l'autre de bout à bout, au moins un fil, de préférence tous les fils, étant un fil de polyamide (21) .

7. Couche de renfort (9) selon la revendication précédente, **caractérisée en ce que** le câble comporte exactement deux fils et a un facteur de torsion de 100 à 250.

8. Pneumatique de véhicule comportant une couche de renfort (9) selon une ou plusieurs des revendications 1 à 7, la couche de renfort étant une couche de renfort (9) d'un bandage de ceinture (8).

9. Pneumatique de véhicule comportant une couche de renfort (9) selon une ou plusieurs des revendications 1 à 7, la couche de renfort étant une couche de renfort (9) d'une carcasse (2).

10. Pneumatique de véhicule comportant une couche de renfort (9) selon une ou plusieurs des revendications 1 à 7, la couche de renfort étant une couche de renfort (9) d'un renforcement de talon (10).
